# EUROPÄISCHE PATENTSCHRIFT

(11) **EP 3 868 459 B1**
(45) Veröffentlichungstag und Bekanntmachung des Hinweises auf die Patenterteilung: **13.04.2022**
(21) Anmeldenummer: 20158501.5
(22) Anmeldetag: 20.02.2020
(51) Int. Cl.: B01D 47/00, B01D 53/00, F23J 15/00, F24H 8/00, F24H 9/00, F28C 3/06, F28D 3/00, F28D 7/00, F28D 21/00

(54) **VORRICHTUNG ZUR NUTZUNG DER ABWÄRME UND/ODER ZUR REINIGUNG EINES RAUCHGASES**
DEVICE FOR UTILIZING WASTE HEAT AND / OR FOR PURIFICATION OF A FLUE GAS
DISPOSITIF DESTINÉ À L'UTILISATION DE LA CHALEUR RÉSIDUELLE ET/OU À LA PURIFICATION D'UN GAZ DE FUMÉE

(43) Veröffentlichungstag der Anmeldung: 25.08.2021
(73) Patentinhaber: Treichl, Richard, 6363 Westerndorf (AT)
(72) Erfinder: Treichl, Richard, 6363 Westendorf (AT)
(74) Vertreter: Patentanwaltskanzlei Matschnig & Forsthuber OG

(56) Entgegenhaltungen:
- EP-A2- 1 967 252
- CH-A5- 663 076
- DE-A1- 3 032 120
- DE-A1- 3 734 292
- DE-A1- 4 026 823
- DE-A1-102015 212 893
- GB-A- 2 394 039
- US-A- 5 843 214
- US-A1- 2014 262 145

## Beschreibung

Die Erfindung betrifft eine Vorrichtung zur Nutzung der Abwärme und/oder zur Reinigung eines Rauchgases, umfassend eine Kammer mit einem Rauchgas-Einlass, wobei Rauchgas über den Rauchgas-Einlass in die Kammer eingebracht werden kann, und einem Rauchgas-Ablass, wobei Rauchgas nach dem Durchströmen durch die Kammer über den Rauchgas-Ablass aus der Kammer geführt wird, wobei die Kammer eine Wärmetauschervorrichtung aufweist, wobei während dem Durchströmen durch die Kammer das Rauchgas gekühlt und/oder gereinigt wird, wobei durch die Wärmetauschervorrichtung ein zu erwärmendes Medium, beispielsweise ein Fluid, geleitet wird, wobei durch den Wärmetausch zwischen dem Rauchgas und dem Medium dem Rauchgas Wärme entzogen wird.

Die Erfindung betrifft weiters ein System, umfassend eine rauchgaserzeugende Anlange und eine Vorrichtung zur Nutzung der Abwärme und/oder zur Reinigung eines Rauchgases. Aus dem Stand der Technik sind gattungsgemäße Vorrichtungen zur Nutzung der Abwärme und/oder zur Reinigung eines Rauchgases bekannt. Um die Effizienz dieser Vorrichtungen zu verbessern, werden üblicherweise größere Wärmetauscher oder eine Vielzahl von Wärmetauschern verwendet. Beispielsweise beschreibt die DE 10 2015 212 893 A1 einen Rauchgaswärmetauscher mit einer Wärmetauschereinrichtung gemäß dem Oberbegriff des Anspruchs 1.

Nachteiligerweise werden dadurch die Dimensionen der Vorrichtung vergrößert und die Produktionskosten erhöht.

Die Aufgabe der vorliegenden Erfindung besteht darin, die Nachteile des Standes der Technik zu lindern bzw. zu beseitigen. Die Erfindung setzt sich daher insbesondere zum Ziel, eine Vorrichtung zu schaffen, mit welcher die Nutzung der Abwärme und/oder die Reinigung des Rauchgases verbessert werden.

Diese Aufgabe wird durch eine Vorrichtung mit den Merkmalen von Anspruch 1 gelöst. Bevorzugte Ausführungen sind in den abhängigen Ansprüchen angegeben. Erfindungsgemäß ist an einer Unterseite der Kammer ein nach oben hin zumindest teilweise offenes mit Flüssigkeit gefülltes Wannenelement angeordnet, wobei das Rauchgas derart über die Flüssigkeitsoberfläche geleitet wird, dass dem Rauchgas zusätzlich Wärme entzogen wird und/oder die Flüssigkeit dem Rauchgas entzogene Partikel aufnimmt, wobei die Temperatur des Rauchgases durch den Wärmetausch unterhalb seines Taupunkts gebracht wird.

Um einen effizienten Wärmetausch zwischen der Flüssigkeit in dem Wannenelement und dem Rauchgas stetig zu gewährleisten, ist vorzugsweise der Flüssigkeitstand in dem Wannenelement zwischen einem minimalen und einem maximalen Pegel einstellbar. Insbesondere ist das Wannenelement während dem Wärmeaustausch permanent mit einem Flüssigkeitsvolumen gefüllt, wobei vorzugsweise der Flüssigkeitspegel des Flüssigkeitsvolumens einstellbar ist. Durch den Kontakt des Rauchgases mit der Flüssigkeitsoberfläche kann die Reinigung und die Kühlung des Rauchgases verbessert werden.

Vorzugsweise weist das Wannenelement eine Regelvorrichtung auf, mit welcher der Flüssigkeitstand in dem Wannenelement einstellbar ist. Damit kann ein idealer Flüssigkeitsstand in dem Wannenelement eingestellt werden. Insbesondere kann ein Überlaufen oder ein Austrocknen des Wannenelements verhindert werden.

Bevorzugt wird die Temperatur des Rauchgases, während dem Durchströmen durch die Kammer, nach dem erstmaligen Unterschreiten des Taupunkts, durch den kontinuierlichen Wärmetausch, stetig unter dem Taupunkt gehalten. Damit kann die Reinigung des Rauchgases besonders effizient erfolgen, da durch den höheren Wasserdampfanteil der Wasserdampf mehr Partikel binden und somit dem Rauchgas entziehen kann.

Um das Rauchgas effizient durch die Kammer zu leiten, ist in der Kammer zumindest ein im Wesentlichen vertikal verlaufendes Rauchgasführungselement angeordnet, durch welches das Rauchgas vertikal von oben nach unten durch die Kammer geführt wird. Die Kammer kann einen oberes Raucheinlassvolumen und ein unteres Rauchgasauslassvolumen aufweisen, wobei das Rauchgasführungselement vorzugsweise als Rauchgasleitrohr ausgebildet ist und das obere Raucheinlassvolumen mit dem unteren Rauchauslassvolumen verbindet. Es können insbesondere zwei, drei, vier, oder mehr, vorzugsweise gleichartige, Rauchgasführungselemente in der Kammer angeordnet sein, wobei die einzelnen Rauchgasführungselemente innerhalb der Kammer horizontal zu einander beabstandet sind. Vorzugsweise wird das Rauchgas über den Rauchgaseinlass in das Rauchgaseinlassvolumen eingebracht, wobei anschließend das Rauchgas durch das Rauchgasführungselement in das Rauchgasauslassvolumen, welches sich insbesondere an einem unteren Bereich der Kammer befindet, geleitet wird, wobei das Rauchgas von dem Rauchgasauslassvolumen über den Rauchgasauslass aus der Kammer geleitet wird. Während dem gesamten Durchlauf des Rauchgases durch die Kammer kann dem Rauchgas Wärme entzogen und das Rauchgas gereinigt werden.

Die Wärmetauschvorrichtung umfasst zumindest einen Wärmetauscher, welcher in dem zumindest einen Rauchgasführungselement angeordnet ist. Vorzugsweise ist ein zusätzlicher Wärmetauscher in einem oberen Bereich der Kammer angeordnet. Insbesondere sind mehrere Rauchgasführungselemente vorgesehen, wobei in jedem Rauchgasführungselement jeweils ein Wärmetauscher vorgesehen ist.

Bevorzugt ist der Rauchgas-Einlass in vertikaler Richtung oberhalb des Rauchgas-Auslasses angeordnet. Damit kann das Rauchgas von oben nach unten durch die Kammer geleitet werden. Vorteilhafterweise folgt damit das Rauchgas einer natürlichen Strömungsrichtung von warm nach kalt, wodurch die Rauchgasströmung durch die Kammer auch ohne zusätzliche Mittel zustande kommt. Dies erhöht wiederum die Energieeffizienz der Vorrichtung.

Um eine effiziente Rauchgasführung durch die Kammer zu gewährleisten, kann an dem Rauchgas-Auslass eine Ventilatorvorrichtung angeordnet sein, welche einen aus der Kammer heraus gerichteten Luftstrom erzeugt. Durch die Ventilatorvorrichtung kann das Rauchgas von oben nach unten durch die Kammer gesaugt werden.

Um die Rauchgaskühlung und/oder die Rauchgasreinigung zu verbessern, kann in einem oberen Bereich der Kammer eine Zerstäubungsvorrichtung angeordnet sein, welche eine Flüssigkeit zerstäubt, wobei die zerstäubte Flüssigkeit mit dem Rauchgas in Kontakt tritt. Damit ergibt sich der Vorteil, dass die zerstäubte Flüssigkeit einerseits das Rauchgas kühlt und andererseits Partikel in dem Rauchgas bindet und das Rauchgas damit reinigt. Vorzugsweise ist die Temperatur der Flüssigkeit unterhalb der Temperatur des Rauchgases. Bevorzugt weist die Flüssigkeit eine Temperatur von beispielsweise unter 50°C, unter 40°C, unter 30°C oder unter 20°C auf.

Um die Kühlung des Rauchgases weiter zu verbessern, kann durch die Kammer ein Luftkanal geführt sein, welcher einen Frischluft-Einlass und einen Frischluft-Auslass aufweist, wobei Frischluft von dem Frischluft-Einlass durch den Luftkanal zu dem Frischluft-Auslass strömt. Als Frischluft kann beispielsweise Luft oder Umgebungsluft, welche von außerhalb der Kammer in die Kammer gesaugt wird, vorgesehen sein. Die Frischluft weist insbesondere eine Temperatur auf, welche unterhalb der Temperatur des Rauchgases liegt. Die Frischluft kann insbesondere Raumtemperatur aufweisen. Der Luftkanal kann beispielsweise ein Teilvolumen der Kammer sein, wobei das Rauchgasführungselement sich durch das Teilvolumen erstreckt. Das Rauchgasführungselement ist vorzugsweise mit dem Rauchgaseinlassvolumen und dem Rauchgasauslassvolumen luftdicht verbunden und bildet einen Rauchgaskanal. Bevorzugt sind der Rauchgaskanal und der Luftkanal luftdicht voneinander getrennt.

Die Frischluft kann während dem Durchströmen des Luftkanals das Rauchgasführungselement umströmen. Dadurch kann die Kühlung des Rauchgases weiter verbessert werden.

Vorzugsweise sind die Frischluft und das Rauchgas in der Kammer kontaktfrei. Der Rauchgaskanal und der Luftkanal sind vorzugsweise in der Kammer voneinander getrennt, wodurch das Rauchgas während dem Durchströmen durch die Kammer mit der Frischluft unvermischt bleibt.

Die Kammer kann ein zweites Wannenelement aufweisen, welches in einem oberen Bereich der Kammer angeordnet ist. Das zweite Wannenelement kann mit einem Fluid, beispielsweise Wasser, gefüllt sein. Damit kann die Kühlung des Rauchgases weiter verbessert werden. Bevorzugt ist das zweite Wannenelement vertikal über dem (ersten) Wannenelement angeordnet, wobei vorzugsweise das Wannenelement und das zweite Wannenelement über das Rauchgasführungselement miteinander verbunden sind.

Bevorzugt ist das zweite Wannenelement mit dem Rauchgasführungselement derart verbunden, dass Rauchgas von dem zweiten Wannenelement in das Rauchgasführungselement strömen kann. Das zweite Wannenelement ist vorzugsweise in dem Rauchgaseinlassvolumen an der Oberseite der Kammer angeordnet.

Die Unterschreitung des Taupunkts des Rauchgases kann durch die vorliegende Vorrichtung besonders rasch erfolgen, da eine Kombination von mehreren unterschiedlichen Kühlelementen (Wärmetauschervorrichtung, Wannenelement, Luftkanal, Zerstäubervorrichtung) zusammenwirkt.

Erfindungsgemäß ist ein System vorgesehen, welches eine rauchgaserzeugende Anlange und eine erfindungsgemäße Vorrichtung zur Nutzung der Abwärme und/oder zur Reinigung eines Rauchgases aufweist.

Das System kann eine Heizvorrichtung umfassen, welche ein zyklisch geführtes Heizmedium aufweist, wobei ein Rücklauf des Heizmediums dem Medium des Wärmetauschers entspricht. Das Heizmedium ist beispielsweise Wasser. Die Heizvorrichtung kann eine Warmwasserheizung sein, wobei der Rücklauf des Heizkreislaufs der Warmwasserheizung als Medium für den Wärmetauscher verwendet werden kann. Damit kann die Vorrichtung zur Nutzung der Abwärme und/oder zur Reinigung eines Rauchgases den Rücklauf der Warmwasserheizung erwärmen, wobei der erwärmte Rücklauf wieder dem Heizkreislauf der Warmwasserheizung zugeführt wird. Als Warmwasserheizung kann eine Fußbodenheizung oder eine Heizkörperheizung vorgesehen sein.

Der Frischluft-Auslass der Vorrichtung zur Nutzung der Abwärme und/oder zur Reinigung eines Rauchgases kann mit einem Luft-Einlass der rauchgaserzeugenden Anlage verbunden sein. Dadurch kann die Frischluft, nachdem sie durch den Frischluftkanal geleitet und dabei erwärmt wurde, der rauchgaserzeugenden Anlage zugeführt werden. Die Frischluft kann somit vorteilhafterweise einen Verbrennungsvorgang in der rauchgaserzeugenden Anlage begünstigen.

Im Rahmen dieser Beschreibung sind die Begriffe "oben", "unten", "horizontal", "vertikal" als Angaben der Ausrichtung zu verstehen, wenn die Vorrichtung in normaler Benutzungsstellung angeordnet ist.

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine schematische Ansicht einer Vorrichtung zur Nutzung der Abwärme und/oder zur Reinigung eines Rauchgases; und
Fig. 2 eine Draufsicht einer oben offenen Vorrichtung gemäß Fig. 1.

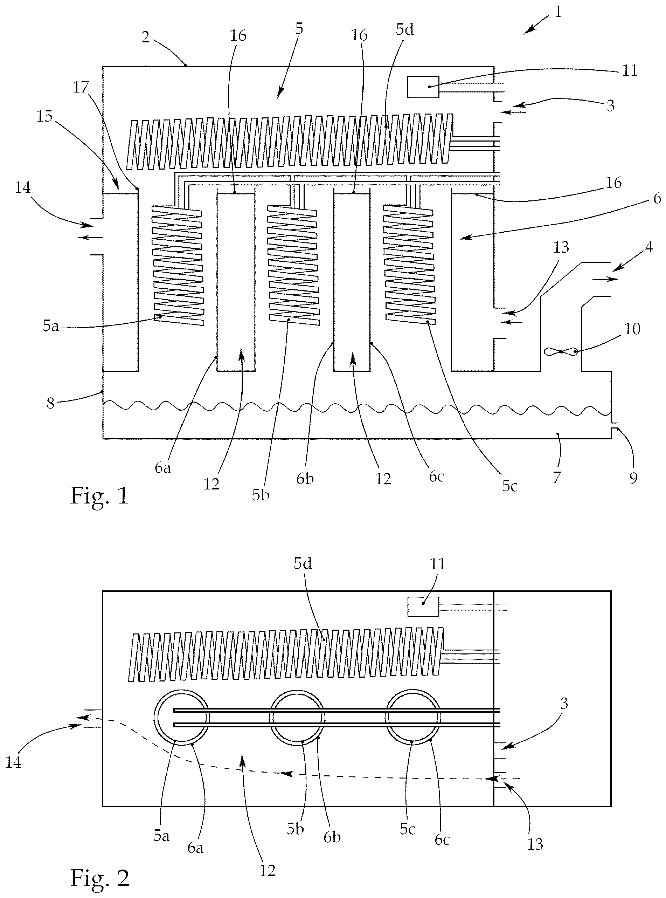

Fig. 1 zeigt einen seitliche Schnittansicht einer Vorrichtung 1 zur Nutzung der Abwärme und/oder zur Reinigung eines Rauchgases. Die Vorrichtung 1 umfassend eine Kammer 2 mit einem Rauchgas-Einlass 3, wobei Rauchgas über den Rauchgas-Einlass 3 in die Kammer 2 eingebracht werden kann. Die Kammer 2 umfasst ferner einen Rauchgas-Ablass 4, wobei Rauchgas nach dem Durchströmen durch die Kammer 2 über den Rauchgas-Ablass 4 aus der Kammer geführt wird. Der Rauchgas-Einlass 3 ist in vertikaler Richtung oberhalb des Rauchgas-Auslasses 4 angeordnet.

Die Kammer 2 weist eine Wärmetauschervorrichtung 5 auf, welche in dem gezeigten Ausführungsbeispiel drei vertikal 5a, 5b, 5c und einen horizontal 5d in der Kammer 2 angeordnete Wärmetauscher umfasst. Die Wärmetauscher 5a, 5b, 5c, 5d sind aus spiralförmigen Metallrohren gebildet. Durch die vier Wärmetauscher 5a, 5b, 5c, 5d der Wärmetauschervorrichtung 5 wird ein zu erwärmendes Medium, beispielsweise ein Fluid, geleitet. Das Medium kann ein Heizmedium einer Heizvorrichtung sein, beispielsweise der Rücklauf einer Warmwasserheizung. Die Kammer 2 weist ein Rauchgasführungselement 6 auf, welches drei vertikal verlaufende Rohre 6a, 6b, 6c umfasst. In jedem Rohr 6a, 6b, 6c ist jeweils ein Wärmetauscher 5a, 5b, 5c angeordnet. Das Rauchgas wird vertikal von oben nach unten durch die vertikalen Rohre 6a, 6b, 6c des Rauchgasführungselements 6 geführt, wobei dabei ein Wärmetausch mit dem Medium der Wärmetauschervorrichtung 5 erfolgt. Damit wird während dem Durchströmen durch die Kammer 2 das Rauchgas gekühlt und gereinigt. An einer Unterseite der Kammer 2 ist ein nach oben hin zumindest teilweise offenes mit Flüssigkeit 7 gefülltes Wannenelement 8 angeordnet. Das Rauchgas wird derart über die Flüssigkeitsoberfläche geleitet, dass dem Rauchgas zusätzlich Wärme entzogen wird und die Flüssigkeit 7 dem Rauchgas entzogene Partikel aufnimmt. Die Temperatur des Rauchgases wird durch den Wärmetausch unterhalb seines Taupunkts gebracht.

Der Flüssigkeitstand in dem Wannenelement 8 zwischen ist einem minimalen und einem maximalen Pegel eingestellt. An dem Wannenelement 8 ist ein Zu- bzw. Abfluss 9 vorgesehen, welcher mit einer Regelvorrichtung (nicht gezeigt) verbunden ist, mit welcher der Flüssigkeitstand in dem Wannenelement 8 einstellbar ist.

An dem Rauchgas-Auslass 4 ist eine Ventilatorvorrichtung 10 angeordnet, welche einen aus der Kammer 2 heraus gerichteten Luftstrom erzeugt.

In einem oberen Bereich der Kammer 2 ist eine Zerstäubungsvorrichtung 11 angeordnet, welche eine Flüssigkeit zerstäubt, wobei die zerstäubte Flüssigkeit mit dem Rauchgas in Kontakt tritt. Die Flüssigkeit ist beispielsweise Wasser. Durch die Kammer 2 ist ein Luftkanal 12 geführt, welcher einen Frischluft-Einlass 13 und einen Frischluft-Auslass 14 aufweist, wobei Frischluft von dem Fristluft-Einlass 13 durch den Luftkanal 12 zu dem Fristluft-Auslass 14 strömt. Die Frischluft umströmt während dem Durchströmen des Luftkanals die vertikalen Rohre 6a, 6b, 6c des Rauchgasführungselements 6, wobei dadurch das Rauchgas zusätzlich gekühlt wird. Die Frischluft und das Rauchgas sind in der Kammer 2 kontaktfrei. Die Kammer 2 weist ein zweites Wannenelement 15 auf, welches in einem oberen Bereich der Kammer 2 angeordnet ist. Das zweite Wannenelement 15 ist mit dem Rauchgasführungselement 6 derart verbunden, dass Rauchgas von dem Wannenelement 15 in das Rauchgasführungselement 6 strömen kann. Im Wesentlichen weist die Kammer 2 in einem oberen Bereich einen Zwischenboden 16 bzw. eine Zwischenebene auf, durch welchen ein oberer Kammerbereich gebildet ist. In diesem oberen Kammerbereich ist der horizontale Wärmetaucher 5d der Wärmetauschervorrichtung 5 angeordnet. Die vertikalen Rohre 6a, 6b, 6c des Rauchgasführungselements 6 ragen jeweils mit einem Endabschnitt 17 nach oben über den Zwischenboden 16 hinaus, wodurch das zweite Wannenelement 15 gebildet ist.

Fig. 2 zeigt eine Draufsicht der Kammer 1, wobei diese, zur besseren Übersicht, als oben offen dargestellt und das zweite Wannenelement 15 nicht gezeigt ist. Wie in Fig. 2 ersichtlich, kann die Luft in dem Luftkanal 12 die Rohre 6a, 6b, 6c, in welchen sich die Wärmetauscher 5a, 5b, 5c befinden, umströmen. Der Luftkanal 12 ist im Wesentlichen jener Bereich der Kammer 1, welcher zwischen dem ersten 8 und dem zweiten Wannenelement 16 und außerhalb der Rohre 6a, 6b, 6c gebildet ist.

## Patentansprüche

1. Vorrichtung (1) zur Nutzung der Abwärme und/oder zur Reinigung eines Rauchgases, umfassend eine Kammer (2) mit einem Rauchgas-Einlass (3), wobei Rauchgas über den Rauchgas-Einlass (3) in die Kammer (2) eingebracht werden kann, und einem Rauchgas-Ablass (4), wobei Rauchgas nach dem Durchströmen durch die Kammer (2) über den Rauchgas-Ablass (4) aus der Kammer (2) geführt wird, wobei die Kammer (2) eine Wärmetauschervorrichtung (5) aufweist, wobei während dem Durchströmen durch die Kammer (2) das Rauchgas gekühlt und/oder gereinigt wird, wobei durch die Wärmetauschervorrichtung (5) ein zu erwärmendes Medium, beispielsweise ein Fluid, geleitet wird, wobei durch den Wärmetausch zwischen dem Rauchgas und dem Medium dem Rauchgas Wärme entzogen wird, wobei an einer Unterseite der Kammer (2) ein nach oben hin zumindest teilweise offenes mit Flüssigkeit (7) gefülltes Wannenelement (8) angeordnet ist, wobei das Rauchgas derart über die Flüssigkeitsoberfläche geleitet wird, dass dem Rauchgas zusätzlich Wärme entzogen wird und/oder die Flüssigkeit dem Rauchgas entzogene Partikel aufnimmt, wobei die Temperatur des Rauchgases durch den Wärmetausch unterhalb seines Taupunkts bringbar ist, wobei in der Kammer (2) zumindest ein im Wesentlichen vertikal verlaufendes Rauchgasführungselement (6) angeordnet ist, durch welches das Rauchgas vertikal von oben nach unten durch die Kammer (2) geführt wird, **dadurch gekennzeichnet, dass** die Wärmetauschvorrichtung (5) zumindest einen Wärmetauscher (5a, 5b, 5c) umfasst, welcher in dem zumindest einen Rauchgasführungselement (6) angeordnet ist.

2. Vorrichtung (1) nach Anspruch 1, wobei der Flüssigkeitstand in dem Wannenelement (8) zwischen einem minimalen und einem maximalen Pegel einstellbar ist, oder wobei das Wannenelement (8) eine Regelvorrichtung aufweist, mit welcher der Flüssigkeitstand in dem Wannenelement einstellbar ist.

3. Vorrichtung (1) nach einem der vorhergehenden Ansprüche, wobei die Temperatur des Rauchgases, während dem Durchströmen durch die Kammer (2), nach dem erstmaligen Unterschreiten des Taupunkts, durch den kontinuierlichen Wärmetausch, stetig unter dem Taupunkt haltbar ist.

4. Vorrichtung (1) nach einem der vorhergehenden Ansprüche, wobei der Rauchgas-Einlass (3) in vertikaler Richtung oberhalb des Rauchgas-Auslasses (4) angeordnet ist.

5. Vorrichtung (1) nach einem der vorhergehenden Ansprüche, wobei an dem Rauchgas-Auslass (4) eine Ventilatorvorrichtung (10) angeordnet ist, welche einen aus der Kammer (2) heraus gerichteten Luftstrom erzeugt.

6. Vorrichtung (1) nach einem der vorhergehenden Ansprüche, wobei in einem oberen Bereich der Kammer (2) eine Zerstäubungsvorrichtung (11) angeordnet ist, welche eine Flüssigkeit zerstäubt, wobei die zerstäubte Flüssigkeit mit dem Rauchgas in Kontakt tritt.

7. Vorrichtung (1) nach einem der vorhergehenden Ansprüche, wobei durch die Kammer (2) ein Luftkanal (12) geführt ist, welcher einen Frischluft-Einlass (13) und einen Frischluft-Auslass (14) aufweist, wobei Frischluft von dem Fristluft-Einlass (13) durch den Luftkanal (12) zu dem Fristluft-Auslass (14) strömt.

8. Vorrichtung (1) nach Anspruch 7, wobei die Frischluft während dem Durchströmen des Luftkanals das Rauchgasführungselement (6) umströmt.

9. Vorrichtung (1) nach Anspruch 7 oder 8, wobei die Frischluft und das Rauchgas in der Kammer (2) kontaktfrei sind.

10. Vorrichtung (1) nach einem der vorhergehenden Ansprüche, wobei die Kammer (2) ein zweites Wannenelement (15) aufweist, welches in einem oberen Bereich der Kammer (2) angeordnet ist, wobei vorzugsweise das zweite Wannenelement (15) mit dem Rauchgasführungselement (6) derart verbunden ist, dass Rauchgas von dem zweiten Wannenelement (15) in das Rauchgasführungselement (6) strömen kann.

11. System, aufweisend eine rauchgaserzeugende Anlange und eine Vorrichtung nach Anspruch 1.

12. System nach Anspruch 11, umfassend eine Heizvorrichtung, welche ein zyklisch geführtes Heizmedium aufweist, wobei ein Rücklauf des Heizmediums dem Medium der Wärmetauschervorrichtung (5) entspricht.

13. System, aufweisend eine rauchgaserzeugende Anlange und eine Vorrichtung nach einem der Ansprüche 7 bis 9, wobei der Frischluft-Auslass (14) der Vorrichtung (1) mit einem Luft-Einlass der rauchgaserzeugenden Anlage verbunden ist.

## Claims

1. Device (1) for utilizing waste heat and/or for purifying a flue gas, comprising a chamber (2) with a flue gas inlet (3), wherein flue gas can be introduced into the chamber (2) via the flue gas inlet (3), and a flue gas outlet (4), wherein flue gas is led out of the chamber (2) via the flue gas outlet (4) after flowing through the chamber (2), wherein the chamber (2) comprises a heat exchanger device (5), wherein during the flow through the chamber (2) the flue gas is cooled and/or purified, wherein a medium to be heated, for example a fluid, is passed through the heat exchanger device (5), wherein heat is extracted from the flue gas by the heat exchange between the flue gas and the medium, wherein on an underside of the chamber (2) there is arranged a tub element (8) which is at least partially open towards the top and is filled with liquid (7), wherein the flue gas is conducted over the liquid surface in such a way that heat is additionally extracted from the flue gas and/or the liquid absorbs particles extracted from the flue gas, wherein the temperature of the flue gas can be brought below its dew point by the heat exchange, wherein at least one substantially vertically extending flue gas guide element (6) is arranged in the chamber (2), through which the flue gas is guided vertically from top to bottom through the chamber (2), **characterized in that** the heat exchange device (5) comprises at least one heat exchanger (5a, 5b, 5c) which is arranged in the at least one flue gas guide element (6).

2. Device (1) according to claim 1, wherein the liquid level in the tub element (8) is adjustable between a minimum and a maximum level, or wherein the tub element (8) comprises a control device with which the liquid level in the tub element is adjustable.

3. Device (1) according to one of the preceding claims, wherein the temperature of the flue gas, while flowing through the chamber (2), is continuously maintainable below the dew point after falling below the dew point for the first time, due to the continuous heat exchange.

4. Device (1) according to one of the preceding claims, wherein the flue gas inlet (3) is arranged in vertical direction above the flue gas outlet (4).

5. Device (1) according to one of the preceding claims, wherein a fan device (10) is arranged at the flue gas outlet (4), which generates an air flow directed out of the chamber (2).

6. Device (1) according to one of the preceding claims, wherein an atomizing device (11) is arranged in an upper region of the chamber (2), which atomizes a liquid, wherein the atomized liquid comes into contact with the flue gas.

7. Device (1) according to any one of the preceding claims, wherein an air duct (12) is guided through the chamber (2), which air duct comprises a fresh air inlet (13) and a fresh air outlet (14), wherein fresh air flows from the fresh air inlet (13) through the air duct (12) to the fresh air outlet (14).

8. Device (1) according to claim 7, wherein the fresh air flows around the flue gas guiding element (6) while flowing through the air channel.

9. Device (1) according to claim 7 or 8, wherein the fresh air and the flue gas are free of contact in the chamber (2).

10. Device (1) according to any one of the preceding claims, wherein the chamber (2) comprises a second well element (15) arranged in an upper region of the chamber (2), preferably the second well element (15) being connected to the flue gas guiding element (6) such that flue gas can flow from the second well element (15) into the flue gas guiding element (6).

11. System comprising a flue gas generating appendage and a device according to claim 1.

12. System according to claim 11, comprising a heating device having a cyclically guided heating medium, wherein a return flow of the heating medium corresponds to the medium of the heat exchanger device (5).

13. System comprising a flue gas generating plant and a device according to any one of claims 7 to 9, wherein the fresh air outlet (14) of the device (1) is connected to an air inlet of the flue gas generating plant.

## Revendications

1. Dispositif (1) pour l'utilisation de la chaleur perdue et/ou pour la purification d'un gaz de fumée, comprenant une chambre (2) avec une entrée de gaz de fumée (3), le gaz de fumée pouvant être introduit dans la chambre (2) par l'intermédiaire de l'entrée de gaz de fumée (3), et une sortie de gaz de fumée (4), le gaz de fumée étant guidé hors de la chambre (2) par l'intermédiaire de la sortie de gaz de fumée (4) après avoir traversé la chambre (2), la chambre (2) présente un dispositif d'échange de chaleur (5), pendant le passage à travers la chambre (2), le gaz de fumée est refroidi et/ou purifié, un milieu à chauffer, par exemple un fluide, est conduit à travers le dispositif d'échange de chaleur (5), de la chaleur étant extraite du gaz de fumée par l'échange de chaleur entre le gaz de fumée et le milieu, un élément de cuve (8) au moins partiellement ouvert vers le haut et rempli de liquide (7) étant disposé sur une face inférieure de la chambre (2), le gaz de fumée étant guidé sur la surface du liquide de telle sorte que de la chaleur supplémentaire soit extraite du gaz de fumée et/ou que le liquide absorbe des particules extraites du gaz de fumée, la température du gaz de fumée pouvant être amenée en dessous de son point de rosée par l'échange thermique, au moins un élément de guidage de gaz de fumée (6) s'étendant essentiellement verticalement étant disposé dans la chambre (2), à travers lequel le gaz de fumée est guidé verticalement de haut en bas à travers la chambre (2), **caractérisé en ce que** le dispositif d'échange de chaleur (5) comprend au moins un échangeur de chaleur (5a, 5b, 5c) qui est disposé dans ledit au moins un élément de guidage de gaz de fumée (6).

2. Dispositif (1) selon la revendication 1, dans lequel le niveau de liquide dans l'élément de cuve (8) est réglable entre un niveau minimal et un niveau maximal, ou dans lequel l'élément de cuve (8) comporte un dispositif de régulation permettant de régler le niveau de liquide dans l'élément de cuve.

3. Dispositif (1) selon l'une des revendications précédentes, dans lequel la température des gaz de combustion peut être maintenue en permanence en dessous du point de rosée pendant le passage à travers la chambre (2), après que le point de rosée a été dépassé pour la première fois par l'échange de chaleur continu.

4. Dispositif (1) selon l'une des revendications précédentes, dans lequel l'entrée des gaz de fumée (3) est disposée verticalement au-dessus de la sortie des gaz de fumée (4).

5. Dispositif (1) selon l'une des revendications précédentes, dans lequel un dispositif de ventilation (10) est disposé à la sortie des fumées (4), lequel génère un flux d'air dirigé vers l'extérieur de la chambre (2).

6. Dispositif (1) selon l'une des revendications précédentes, dans lequel est disposé dans une zone supérieure de la chambre (2) un dispositif de pulvérisation (11) qui pulvérise un liquide, le liquide pulvérisé entrant en contact avec les fumées.

7. Dispositif (1) selon l'une des revendications précédentes, dans lequel la chambre (2) est traversée par un conduit d'air (12) comprenant une entrée d'air frais (13) et une sortie d'air frais (14), l'air frais s'écoulant de l'entrée d'air frais (13) vers la sortie d'air frais (14) en passant par le conduit d'air (12).

8. Dispositif (1) selon la revendication 7, dans lequel l'air frais circule autour de l'élément de guidage des fumées (6) pendant qu'il traverse le canal d'air.

9. Dispositif (1) selon la revendication 7 ou 8, dans lequel l'air frais et les gaz de combustion dans la chambre (2) sont sans contact.

10. Dispositif (1) selon l'une des revendications précédentes, dans lequel la chambre (2) comprend un deuxième élément de cuve (15) qui est disposé dans une zone supérieure de la chambre (2), le deuxième élément de cuve (15) étant de préférence relié à l'élément de guidage des gaz de combustion (6) de telle sorte que les gaz de combustion peuvent s'écouler depuis le deuxième élément de cuve (15) dans l'élément de guidage des gaz de combustion (6).

11. Système comprenant une installation de production de gaz de fumée et un dispositif selon la revendication 1.

12. Système selon la revendication 11, comprenant un dispositif de chauffage qui présente un milieu de chauffage guidé de manière cyclique, un retour du milieu de chauffage correspondant au milieu du dispositif d'échange de chaleur (5).

13. Système comprenant une installation génératrice de gaz de combustion et un dispositif selon l'une quelconque des revendications 7 à 9, dans lequel la sortie d'air frais (14) du dispositif (1) est reliée à une entrée d'air de l'installation génératrice de gaz de combustion.
